# EUROPÄISCHE PATENTSCHRIFT

(11) **EP 2 203 634 B1**
(45) Veröffentlichungstag und Bekanntmachung des Hinweises auf die Patenterteilung: **13.05.2015**
(21) Anmeldenummer: 08802019.3
(22) Anmeldetag: 11.09.2008
(51) Int. Cl.: F02D 41/02, F02D 41/14, F02D 41/22, F02D 41/40, F01N 11/00

(54) **VERFAHREN ZUM PRÜFEN DER FUNKTIONSFÄHIGKEIT EINES OXIDATIONSKATALYSATORS EINER BRENNKRAFTMASCHINE**
METHOD FOR TESTING THE FUNCTIONALITY OF AN OXIDATION CATALYST OF AN INTERNAL COMBUSTION ENGINE
PROCÉDÉ PERMETTANT DE TESTER LA FONCTIONNALITÉ D'UN CATALYSEUR D'OXYDATION D'UN MOTEUR À COMBUSTION INTERNE

(30) Priorität: 21.09.2007 DE 102007045256
(43) Veröffentlichungstag der Anmeldung: 07.07.2010
(73) Patentinhaber: Volkswagen Aktiengesellschaft, 38440 Wolfsburg (DE)
(72) Erfinder: ALICH, Frank, 38473 Tiddische (DE); VELDTEN, Burkhard, 31234 Edemissen (DE); GEHRKE, Volker, 38106 Braunschweig (DE)
(86) Internationale Anmeldenummer: PCT/EP2008/007458
(87) Internationale Veröffentlichungsnummer: WO 2009/039965

(56) Entgegenhaltungen:
- EP-A- 1 052 385
- EP-A- 1 085 179
- EP-A- 1 559 894
- EP-A- 1 574 682
- DE-A1- 19 654 693
- US-A- 4 007 589
- US-A- 5 416 710
- US-A- 5 675 967
- US-A1- 2004 168 430

## Beschreibung

Die Erfindung betrifft Verfahren zum Prüfen der Funktionsfähigkeit eines Oxidationskatalysators einer Brennkraftmaschine, insbesondere eines Dieselmotors, eines Kraftfahrzeugs, gemäß Patentanspruch 1.

Mit aktuellen Diagnoseverfahren für Oxidationskatalysatoren ist ein Totalausfall diagnostizierbar, jedoch keine Teilschädigung die auch bereist eine Erhöhung von Schadstoffemissionen bewirkt. Ein solches Verfahren zeigt US 5416710.

Der Erfindung liegt die Aufgabe zugrunde, eine funktionssichere Überwachung eines Oxidationskatalysators zur Verfügung zu stellen, die über den reinen Totalausfall des Oxidationskatalysators hinaus auch nur teilweise Schädigungen des Oxidationskatalysators erkennt.

Diese Aufgabe wird erfindungsgemäß durch ein Verfahren der o.g. Art mit den in Anspruch 1 angegebenen Verfahrensschritten gelöst. Vorteilhafte Ausgestaltungen der Erfindung sind in den weiteren Ansprüchen beschrieben.

Dazu sind bei einem Verfahren der o.g. Art erfindungsgemäß folgende Schritte vorgesehen:
(a) Prüfen, ob das Kraftfahrzeug steht,
(b) Prüfen, ob sich die Brennkraftmaschine im Leerlauf befindet,
(c) Prüfen, ob eine Temperatur vor und nach dem Oxidationskatalysator innerhalb eines vorbestimmten Bereiches liegt,
(d) falls die Prüfung aller Schritte (a) bis (c) jeweils "ja" ergibt, aktives Eingreifen in das Motormanagement derart, dass im Oxidationskatalysator eine vorbestimmte Temperatur eingestellt wird,
(e) aktives Erzeugen von HC durch eine späte Nacheinspritzung von Kraftstoff, sobald die vorbestimmte Temperatur gemäß Schritt (d) erreicht ist,
(f) Messen eines Lambdawertes vor und nach dem Oxidationskatalysator sobald die vorbestimmte Temperatur in Schritt (d) erreicht ist und während in Schritt (e) HC aktiv erzeugt wird,
(g) Bestimmen einer Differenz der Lambdawerte vor und nach dem Oxidationskatalysator und
(h) Feststellen, dass der Oxidationskatalysator geschädigt ist, falls die Differenz aus Schritt (g) kleiner als ein vorbestimmter Wert ist.

Dies hat den Vorteil, dass auch teilgeschädigte Oxidationskatalysatoren innerhalb einer sehr kurzen Zeitspanne von weniger als 10 Sekunden erkannt werden können. Durch das Lambdadelta - die Differenz gemäß Schnitt (g) - wird auf eine Konvertierungsaktivität bei dieser Temperatur geprüft, so dass die Zieltemperatur die Diagnoseschärfe bestimmt.

Zweckmäßigerweise ist die vorbestimmte Temperatur in Schritt (d) die Aktivierungstemperatur des ungeschädigten Oxidationskatalysators.

Die Temperatur im Oxidationskatalysator wird beispielsweise aus einer vor und/oder nach dem Oxidationskatalysator gemessenen Temperatur bestimmt.

Die Erfindung wird im Folgenden näher erläutert.

Die Diagnose wird bei stehendem Fahrzeug im Motorleerlauf durchgeführt, falls die Temperaturen vor und nach Oxidationskatalysator in einem gültigen Bereich sind. Die Temperatur darf nicht zu hoch sein, da ansonsten kein Defekt erkannt werden kann und ein Abkühlen zu lange dauern würde. Falls diese zu niedrig ist, würde das Aufheizen bis zur Zieltemperatur zu lange dauern. Sind alle Freigaben erfüllt, wird die Temperatur vor Oxidationskatalysator auf eine vorbestimmte Zieltemperatur eingestellt. Dies erfolgt durch entsprechenden aktiven Eingriff in das Motormanagement. Beispielsweise wird die Temperatur vor Oxidationskatalysator durch androsseln (geringere Abkühlung durch Frischluft) und frühe Nacheinspritzung, die zusätzliche Wärmeenergie erzeugt, erhöht. Danach, d.h. sobald die gewünschte Temperatur vor Oxidationskatalysator erreicht ist, läuft die eigentliche Diagnose ab. Dabei werden durch eine späte Nacheinspritzung Kohlenwasserstoffe (HC) generiert und ein Lambdawert vor und nach dem Oxidationskatalysator gemessen. Die Diagnose der Schädigung des Oxidationskatalysators erfolgt durch eine Bewertung einer Differenz des Lambdawertes vor und nach dem Oxidationskatalysator. Ist der Betrag dieser Differenz unterhalb eines vorbestimmten Wertes, dann ist der Oxidationskatalysator geschädigt, da dieser dann zu wenig HC und CO oxidiert.

Ein kritischer Temperaturbereich, in dem die erfindungsgemäße Diagnose zugelassen ist und aktiviert wird, ist die Aktivierungstemperatur des Oxidationskatalysators, also diejenige Temperatur, bei der der Oxidationskatalysator fähig ist, HC und CO zu oxidieren. Bei einem gealtertem Oxidationskatalysator verschiebt sich diese Temperatur nach oben, was dazu führt, dass die Aktivierung später im Abgastestzyklus erfolgt, wodurch dann der Gesamtwirkungsgrad dieser Abgasnachbehandlungsmaßnahme verschlechtert wird.

Bei dem erfindungsgemäßen Verfahren ist kein verbrauchs- und emissionserhöhendes Aktivieren durch einen Schädigungsverdacht notwendig, da durch die deutlich geringeren Mehremissionen beim erfindungsgemäßen Diagnoseeingriff dieser häufiger erfolgen kann.

Zur Freigabe des erfindungsgemäßen Diagnoseverfahrens wird die Abgastemperatur direkt vor und nach dem Oxidationskatalysator gemessen. Die Lambdasignale werden an einer ersten Stelle stromauf des Oxidationskatalysators und an einer zweiten Stelle stromab des Oxidationskatalysators gemessen.

Die erfindungsgemäße Diagnose soll genau beim Erreichen der Aktivierungstemperatur des Oxidationskatalysators durchgeführt werden, da ein aktives Abkühlen kaum möglich ist. Die Diagnose erfolgt somit bevorzugt direkt bei oder unmittelbar oberhalb der Aktivierungstemperatur.

## Patentansprüche

1. Verfahren zum Prüfen der Funktionsfähigkeit eines Oxidationskatalysators einer Brennkraftmaschine, insbesondere eines Dieselmotors, eines Kraftfahrzeugs, mit folgenden Schritten,
(a) Prüfen, ob das Kraftfahrzeug steht,
(b) Prüfen, ob sich die Brennkraftmaschine im Leerlauf befindet,
(c) Prüfen, ob eine Temperatur vor und nach dem Oxidationskatalysator innerhalb eines vorbestimmten Bereiches liegt,
(d) falls die Prüfung aller Schritte (a) bis (c) jeweils "ja" ergibt, aktives Eingreifen in das Motormanagement derart, dass im Oxidationskatalysator eine vorbestimmte Temperatur eingestellt wird,
(e) aktives Erzeugen von HC durch eine späte Nacheinspritzung von Kraftstoff,
(f) Messen eines Lambdawertes vor und nach dem Oxidationskatalysator sobald die vorbestimmte Temperatur in Schritt (d) erreicht ist und während in Schritt (e) HC aktiv erzeugt wird,
(g) Bestimmen einer Differenz der Lambdawerte vor und nach dem Oxidationskatalysator und
(h) Feststellen, dass der Oxidationskatalysator geschädigt ist, falls die Differenz aus Schritt (g) kleiner als ein vorbestimmter Wert ist.

2. Verfahren nach Anspruch 1, **dadurch gekennzeichnet, dass** die vorbestimmte Temperatur in Schritt (d) die Aktivierungstemperatur des ungeschädigten Oxidationskatalysators ist.

3. Verfahren nach Anspruch 1 oder 2, **dadurch gekennzeichnet, dass** die Temperatur im Oxidationskatalysator aus einer vor und/oder nach dem Oxidationskatalysator gemessenen Temperatur bestimmt wird.

## Claims

1. Method for testing the functionality of an oxidation catalytic converter of an internal combustion engine, in particular of a diesel engine, of a motor vehicle, having the following steps,
(a) checking whether the vehicle is at a standstill,
(b) checking whether the internal combustion engine is at idle,
(c) checking whether a temperature upstream and downstream of the oxidation catalytic converter lies within a predetermined range,
(d) if the checks in all of steps (a) to (c) are each answered "yes", actively intervening in the engine management such that a predetermined temperature is set in the oxidation catalytic converter,
(e) actively generating HC by means of a late post-injection of fuel,
(f) measuring a lambda value upstream and downstream of the oxidation catalytic converter when the predetermined temperature in step (d) is reached and while HC is actively generated in step (e),
(g) determining a difference between the lambda values upstream and downstream of the oxidation catalytic converter and
(h) establishing that the oxidation catalytic converter is damaged if the difference from step (g) is smaller than a predetermined value.

2. Method according to Claim 1, **characterized in that** the predetermined temperature in step (d) is the activation temperature of the undamaged oxidation catalytic converter.

3. Method according to Claim 1 or 2, **characterized in that** the temperature in the oxidation catalytic converter is determined from a temperature measured upstream and/or downstream of the oxidation catalytic converter.

## Revendications

1. Procédé permettant de vérifier la fonctionnalité d'un catalyseur d'oxydation d'un moteur à combustion interne, en particulier d'un moteur diesel, d'un véhicule automobile, comprenant les étapes suivantes :
(a) vérification que le véhicule automobile est à l'arrêt,
(b) vérification que le moteur à combustion interne tourne au ralenti,
(c) vérification qu'une température avant et après le catalyseur d'oxydation est à l'intérieur d'une plage prédéterminée,
(d) si la vérification de toutes les étapes (a) à (c) a pour résultat dans chaque cas "oui", engagement actif dans la gestion du moteur, de telle sorte qu'une température prédéterminée s'établisse dans le catalyseur d'oxydation,
(e) génération active d'hydrocarbures par une post-injection retardée de carburant,
(f) mesure d'une valeur lambda avant et après le catalyseur d'oxydation dès que la température prédéterminée à l'étape (d) est atteinte, et que pendant l'étape (e) des hydrocarbures sont générés activement,
(g) détermination d'une différence entre les valeurs lambda avant et après le catalyseur d'oxydation et
(h) établissement que le catalyseur d'oxydation est défectueux si la différence issue de l'étape (g) est inférieure à une valeur prédéterminée.

2. Procédé selon la revendication 1, **caractérisé en ce que** la température prédéterminée à l'étape (d) est la température d'activation du catalyseur d'oxydation non défectueux.

3. Procédé selon la revendication 1 ou 2, **caractérisé en ce que** la température dans le catalyseur d'oxydation est déterminée à partir d'une température mesurée avant et/ou après le catalyseur d'oxydation.
